# NEUE EUROPÄISCHE PATENTSCHRIFT

(11) **EP 2 078 538 B2**
(45) Veröffentlichungstag und Bekanntmachung des Hinweises auf die Entscheidung über den Einspruch: **15.06.2016**
(45) Hinweis auf die Patenterteilung: 16.01.2013
(21) Anmeldenummer: 08170250.8
(22) Anmeldetag: 28.11.2008
(51) Int. Cl.: A62C 2/06, A62C 3/07, B32B 15/00

(54) **Feuerschutz-Abschlussplatte**
Fire protection end plate
Plaque d'obturation ignifuge

(30) Priorität: 14.01.2008 DE 102008004272
(43) Veröffentlichungstag der Anmeldung: 15.07.2009
(73) Patentinhaber: Siemens Aktiengesellschaft, 80333 München (DE)
(72) Erfinder: Groß, Thomas, 42117 Wuppertal (DE)

(56) Entgegenhaltungen:
- DD-A- 236 708
- GB-A- 2 328 694
- US-A- 4 888 057

## Beschreibung

Die Erfindung bezieht sich auf eine Feuerschutz-Abschlussplatte, insbesondere zur Verwendung bei Schienenfahrzeugtrennwänden, mit einer metallischen Grundplatte und einer auf der metallischen Grundplatte aufgebrachten Brandschutzschicht, die von einer intumeszierenden Materialschicht gebildet ist, die großflächig mit der metallischen Grundplatte verbunden ist.

Eine solche Platte ist beispielsweise aus der GB 23 28 694 A bekannt, bei der ein gegen Feuer und Wärmeeinwirkung zu schützendes Stahl-Bauteil von einem metallischen Gehäuse umgeben ist, welches auf seiner Innenseite mit intumeszierendem Material beschichtet ist.

Beispiele für intumeszierenden Material-Zusammensetzungen ergeben sich aus der US 4 888 057 A.

Eine solche Feuerschutz-Abschlussplatte hat im Anwendungsfall bei Schienenfahrzeugen insbesondere zwei Zwecke, nämlich "Raumabschluss" und "Wärmedämmung" für einen Zeitraum von fünfzehn Minuten ab Ausbruch eines Brandes. Dabei soll eine Konstruktion gewählt sein, die möglichst leicht ist und möglichst wenig Bauraum in Anspruch nimmt.
Aus der DD 236 708 A1 ist eine Feuerschutz-Abschlussplatte bekannt, die eine Asbestschicht enthält.

Im Stand der Technik sind einige Brandschutzplatten bekannt, wie beispielsweise die Brandschutzplatte CP 675 der Firma Hilti, die in Kombination mit einem Aluminiumblech eine Feuerschutz-Abschlussplatte bildet. Eine solche Platte hätte ein Flächengewicht von mehr als 19 km/m² und eine Dicke von mindestens 30 mm. Außerdem bekannt sind sehr dicke Holzspanplatten, die ein Flächengewicht von mehr als 22,5 kg/m² und eine Dicke von 30 mm aufweisen. Eine weitere, aus dem Stand der Technik bekannte Alternative für eine Feuerschutz-Abschlussplatte wird gebildet aus einer Stahlwand mit einer Dicke von 2 mm, die mit mindestens 50 mm Mineralwolle belegt ist.

Ausgehend hiervon liegt der Erfindung die Aufgabe zu Grunde, eine Feuerschutz-Abschlussplatte anzugeben, die insbesondere für Fahrzeugtrennwände bei Schienenfahrzeugen geeignet ist und sich durch vergleichsweise wenig Bauraum auszeichnet, wobei die erforderlichen Eigenschaften hinsichtlich "Raumabschluss" und "Wärmedämmung" erfüllt werden.

Diese Aufgabe wird bei einer Feuerschutz-Abschlussplatte durch die Merkmale des Anspruchs 1 gelöst.

Solche intumeszierenden Materialschichten haben die Eigenschaft, unter Hitzeeinwirkung aufzuschäumen. Der dabei entstehende Schaum hat insbesondere auch Wärmeschutzeigenschaften.

Die Brandschutzschicht kann bevorzugt Natriumsilikat enthalten und derart ausgebildet sein, dass das Natriumsilikat bei Hitzeinwirkung aufschäumt.

Die Brandschutzschicht kann bevorzugt aus dem Material Palusot^{®} bestehen. Dabei handelt es sich um ein Plattenprodukt der Firma BASF, welches Brandschutzeigenschaften hat, jedoch bisher ausschließlich zum gezielten Verfüllen von Fugenspalten zur Verhinderung eines Durchtritts von Feuer und Rauch für eine vorgegebene Zeit eingesetzt wurde.

Die Brandschutzschicht kann eine Dicke von wenigstens 1,5 mm aufweisen, während eine metallische Grundplatte beispielsweise als Aluminiumblech vorgesehen ist, welches eine Mindestdicke von 4 mm aufweist.

Alternativ kann als die metallische Grundplatte ein Stahlblech vorgesehen sein, dass eine Mindestdicke von 1,5 mm aufweist.

Zum Schutz gegen Vibrationen und Erschütterungen, wie sie beim Betrieb beispielsweise eines Schienenfahrzeugs auftreten können, ist die metallische Grundplatte mit der Brandschutzschicht mechanisch verbunden, insbesondere verschraubt. Die Brandschutzschicht ist mit Hilfe metallischer Rahmen auf der metallischen Grundplatte gesichert.

Die Gesamtdicke der Feuerschutz-Abschlussplatte liegt im Bereich zwischen 2 mm und 7 mm, was im Vergleich zum Stand der Technik eine sehr geringe Dicke ist. Auch das Flächengewicht zeigt sehr positive Werte, die im Bereich von 13 bis 16 kg/m² liegen.

Die Feuerschutz-Abschlussplatte ist grundsätzlich zum Abschluss von Räumen aller Art geeignet und kann insbesondere auch bei Trennwänden von Schienenfahrzeugen verwendet werden.

Ausführungsbeispiele der Erfindung werden nachfolgend unter Bezugnahme auf die Zeichnung noch näher erläutert. Es zeigen:
- Figur 1: eine Ansicht in Längsrichtung eines Schienenfahrzeugs auf eine Führerraumtrennwand, teilweise im Schnitt, und
- Figur 2: eine Querschnittsansicht der Führerraumtrennwand von Figur 1 entlang einer Linie A-A.
- Figur 3: eine Querschnittsansicht einer FeuerschutzAbschlussplatte.

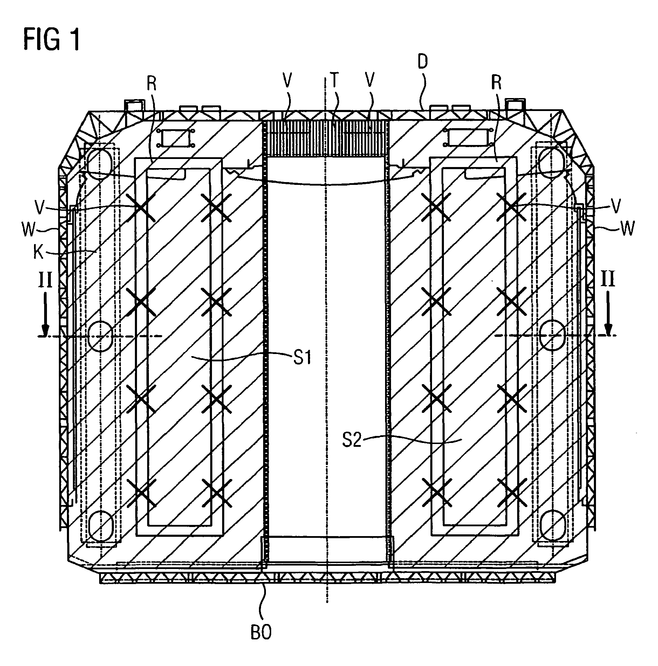

Die Darstellung von Figur 1 zeigt eine Führerraumtrennwand aus Aluminiumblech mit Palusol®-Beschichtung. Die Führerraumtrennwand weist zwei Seitenabschnitte S1, S2 auf, die sich vom Boden BO des Schienenfahrzeugs bis zu dessen Dach D erstrecken, mit einer Seitenwand W des Schienenfahrzeugs abschließen und sich derart nach innen erstrecken, dass ein mittlerer Bereich für einen Türdurchgang frei bleibt. Oberhalb des Türdurchgangs mit Abschluss zum Dach D ist eine Türplatte T angeordnet, die ebenfalls als Feuerschutz-Abschlussplatte ausgeführt ist.

Die beiden Seitenabschnitte S1, S2 sowie die Türplatte T sind sämtlich als Feuerschutz-Abschlussplatte ausgeführt

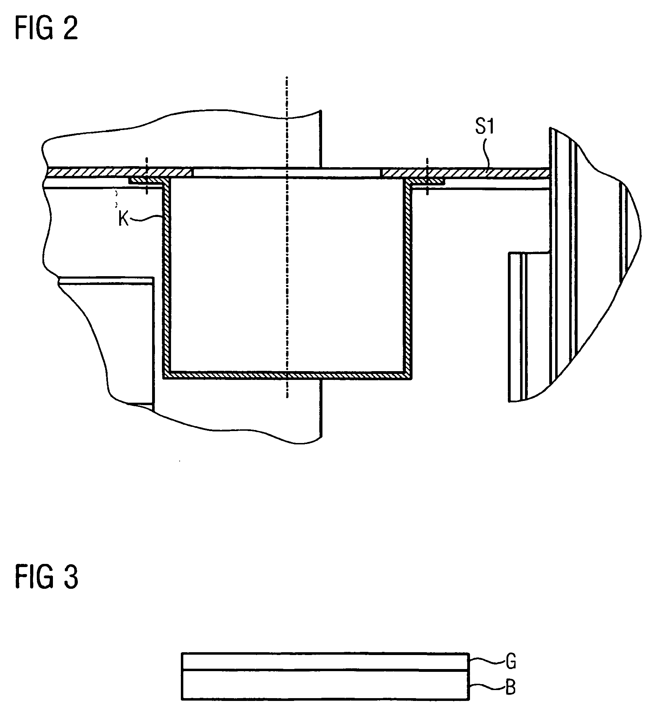

Auf Außenseiten der Seitenabschnitte S1, S2 befinden sich vertikal verlaufende Klimakanäle K, die als Blechkanäle ausgeführt sind. Dazu wird auf die Querschnittsansicht von Figur 2 verwiesen, die eine Kombination aus einem Blechkanal K und einem Seitenabschnitt S1 zeigt.

Ersichtlich ist der Blechkanal K mit dem Seitenabschnitt S1 verschraubt, wobei Innenabmessungendes Blechkanals größer sind als eine Lüftungsöffnung O. Somit ist der Blechkanal K unmittelbar auf einer Brandschutzschicht angebracht.

Da die Seitenabschnitte S1, S2 großflächig ausgebildet sind, sind Maßnahmen getroffen, ein Ablösen einer Brandschutzschicht B von einer darunter liegenden metallischen Grundplatte G zu vermeiden (vgl. Fig. 3). Zu diesem Zweck sind Metallrahmen R vorgesehen, die an mehreren Stellen mit Hilfe von Schraubverbindungen V eine mechanische Verbindung zwischen der Brandschutzschicht B und der Grundplatte G herstellen. Dies bewirkt, dass bei Hitzeeinwirkung ein Ablösen der aufschäumenden, intumeszierenden Brandschutzschicht B von der metallischen Grundplatte G nicht zu einem Ablösen davon führt.

Im Fall der Türplatte T reichen zwei Schraubverbindungen V aus, um ein Ablösen zu verhindern. Auch hier sind jedoch mechanische Verbindungen zwischen Brandschutzschicht B und Grundplatte G günstig.

Die in Figur 1 schraffierten Bereiche sind Verbund- bzw. Sandwichplatten aus einer metallischen Grundplatte G, die mit einem intumeszierenden Material belegt ist, bevorzugt mit Platten aus Palusol®. Diese Platten enthalten Natriumsilikat und haben die Eigenschaft, unter Hitzeeinwirkung aufzuschäumen und damit eine Wärmedämmung für wenigstens 15 Minuten im Gefahrenfall bereitzustellen.

Nachfolgend werden einige Beispiele für die Feuerschutz-Abschlussplatte, die als Verbundplatte ausgebildet ist, aufgezählt:
1) Ein Probekörper für eine Feuerschutz-Abschlussplatte hat die Maße 500 x 500 x 6 mm, ein Gewicht von 3,3372 kg, so dass sich ein Flächengewicht von 13,35 kg/m² ergibt. Die Feuerschutz-Abschlussplatte besteht aus, beschrieben von einer feuerzugewandten Seite aus, einer Brandschutzschicht aus Palusol® mit einer Dicke von 1,9 mm, verklebt mit einem Aluminiumblech einer Dicke von 4,0 mm. Bei einer solchen Feuerschutz-Abschlussplatte wurde dessen Feuerwiderstandsdauer ermittelt, und zwar mit dem Ergebnis, dass das zulässige Temperaturmittel von 140 K gemäß DIN4102-2 nach 25 Minuten mit der Erreichung eines Temperaturwertes von 146,26 K überschritten wurde.
2) Der Prüfling für eine Feuerschutz-Abschlussplatte bestand aus, von der feuerzugewandten Seite aus gesehen, einer Brandschutzschicht aus Palusol®Typ100 mit einer Dicke von 1,9 mm, zwei Aluminiumblechen mit einer Gesamtdicke von 2,0 mm und einem Blechkanal, der auf den Flächen der Brandschutzschicht bestückt wurde.

Die Brandschutzschicht wurde mit ROKU-Kleber "1K 1013" verklebt. Der Probekörper hatte die Maße 500 x 500 x 6,0/150 mm.

Der geprüfte Probekörper erreichte, bei einer Zugrundelegung der zulässigen Temperaturdifferenz, eine Feuerwiderstandsdauer von 24 Minuten.

Die Untersuchung des Probekörpers ergab, dass die Aluminiumplatten vollständig vom Schaumkörper des Dämmschichtbildners Palusol® geschützt waren, was auf dessen vollständige Expansion zurückgeht. Auch in dem Blechkanal konnte die vollständige Expansion des Dämmschildbildners Palusol® festgestellt werden, in den Ecken des Kanals hatte sich das Palusol® verbunden bzw. ist fest verbakken.

## Patentansprüche

1. Feuerschutz-Abschlussplatte (S1, S2, T) zur Verwendung bei Schienenfahrzeugtrennwänden, mit einer metallischen Grundplatte. (G) und einer auf der metallischen Grundplatte (G) aufgebrachten Brandschutzschicht (B), die von einer intumeszierenden Materialschicht gebildet ist, die großflächig mit der metallischen Grundplatte (G) verbunden ist,
**dadurch gekennzeichnet, dass**
die Brandschutzschicht (B) plattenförmig und mit der metallischen Grundplatte (G) mechanisch verbunden ist,
wobei eine Gesamtdicke der Feuerschutz-Abschlussplatte (S1, S2, T) im Bereich von 3 - 7 mm und ein Flächengewicht der Feuerschutz-Abschlussplatte (S1, S2, T) im Bereich von 13 - 16 kg/m² liegt und
die Brandschutzschicht (B) mit Hilfe von metallischen Rahmen gegen Vibrationen und Erschütterungen gesichert ist.

2. Feuerschutz-Abschlussplatte (S1, S2, T) nach Anspruch 1, **dadurch gekennzeichnet, dass** die Brandschutzschicht (B) Natriumsilikat enthält und derart ausgebildet ist, dass das Natriumsilikat bei Hitzeeinwirkung aufschäumt.

3. Feuerschutz-Abschlussplatte (S1, S2, T) nach Anspruch 2, dadurch gekenntzeichnet, dass
die Brandschutzschicht (B) aus Palusol^{®} besteht.

4. Feuerschutz-Abschlussplatte (S1, S2, T) nach einem der Ansprüche 1 bis 3,
**dadurch gekennzeichnet, dass**
die Brandschutzschicht (B) ein Dicke von wenigstens 1,5 mm aufweist.

5. Feuerschutz-Abschlussplatte (S1, S2, T) nach einem der Ansprüche 1 bis 4,
**dadurch gekennzeichnet, dass**
als die metallische Grundplatte (G) ein Aluminiumblech vorgesehen ist.

6. Feuerschutz-Abschlussplatte (S1, S2, T) nach Anspruch 5, **dadurch gekennzeichnet, dass**
das Aluminiumblech eine Mindestdicke von 4 mm aufweist.

7. Feuerschutz-Abschlussplatte (S1, S2, T) nach einem der Ansprüche 1 bis 4,
**dadurch gekennzeichnet, dass**
für die metallische Grundplatte (G) ein Stahlblech vorgesehen ist.

8. Feuerschutz-Abschlussplatte (S1, S2, T) nach Anspruch 7, **dadurch gekennzeichnet, dass**
das Stahlblech eine Mindestdicke von 1,5 mm aufweist.

9. Feuerschutz-Abschlussplatte (S1, S2, T) nach einem der Ansprüche 1 bis 8,
**dadurch gekennzeichnet, dass**
die Brandschutzschicht (B) mit Hilfe von Schraubverbindungen gegen Vibrationen und Erschütterungen gesichert ist.

10. Feuerschutz-Abschlussplatte (S1, S2, T) nach einem der Ansprüche 1 bis 9,
**dadurch gekennzeichnet, dass**
die Brandschutzschicht (B) mit der metallischen Grundplatte (G) verklebt ist.

## Claims

1. Fire protection end plate (S1, S2, T) for use in rail vehicle partition walls, having a metallic base plate (G) and a fireproof layer (B) which is applied to the metallic base plate (G) and is formed by an intumescent material layer which is connected to the metallic base plate (G) over a large area,
**characterized in that**
the fireproof layer (B) is plate-like and is mechanically connected to the metallic base plate (G),
wherein an overall thickness of the fire protection end plate (S1, S2, T) lies in the range of 3-7mm and a weight per unit area of the fire protection and plate (S1, S2, T) lies in the range of 13-16 kg/m² and
the fireproof layer (B) is protected against vibrations and shaking with the aid of metallic frames.

2. Fire protection end plate (S1, S2, T) according to Claim 1,
**characterized in that** the fireproof layer (B) contains sodium silicate and is formed in such a manner that the sodium silicate foams under the action of heat.

3. Fire protection end plate (S1, S2, T) according to Claim 2,
**characterized in that**
the fireproof layer (B) consists of Palusol®.

4. Fire protection end plate (S1, S2, T) according to one of Claims 1 to 3,
**characterized in that**
the fireproof layer (B) has a thickness of at least 1.5 mm.

5. Fire protection end plate (S1, S2, T) according to one of Claims 1 to 4,
**characterized in that**
an aluminium sheet is provided as the metallic base plate (G).

6. Fire protection end plate (S1, S2, T) according to Claim 5,
**characterized in that**
the aluminium sheet has a minimum thickness of 4 mm.

7. Fire protection end plate (S1, S2, T) according to one of Claims 1 to 4,
**characterized in that**
a steel sheet is provided for the metallic base plate (G).

8. Fire protection end plate (S1, S2, T) according to Claim 7,
**characterized in that**
the steel sheet has a minimum thickness of 1.5 mm.

9. Fire protection end plate (S1, S2, T) according to one of Claims 1 to 8,
**characterized in that**
the fireproof layer (B) is protected against vibrations and shaking with the aid of screwed connections.

10. Fire protection end plate (S1, S2, T) according to one of Claims 1 to 9,
**characterized in that**
the fireproof layer (B) is adhesively bonded to the metallic base plate (G).

## Revendications

1. Plaque (S1, S2, T) d'obturation anti-feu à utiliser dans des cloisons de véhicules ferroviaires, comprenant une plaque (G) de base métallique et une couche (B) d'ignifugation déposée sur la plaque (G) de base métallique et formée par une couche de matière intumescente, couche qui est reliée sur une grande surface à la plaque (G) de base métallique, **caractérisée en ce que**
la couche (B) d'ignifugation est sous une forme de plaque et est reliée mécaniquement à la plaque (G) de base métallique, dans laquelle une épaisseur totale de la plaque (S1, S2, T) d'obturation anti-feu est de l'ordre de 3 à 7 mm et un poids par unité de surface de la plaque (S1, S2, T) d'obturation anti-feu est de l'ordre de 13 à 16 kg/m² et
la couche (B) d'ignifugation est protégée des vibrations et de secousses à l'aide de cadres métalliques.

2. Plaque (S1, S2, T) d'obturation anti-feu suivant la revendication 1,
**caractérisée en ce que**
la couche (B) d'ignifugation contient du silicate de sodium et est telle que le silicate de sodium mousse sous l'effet de la chaleur.

3. Plaque (S1, S2, T) d'obturation anti-feu suivant la revendication 2,
**caractérisée en ce que**
la couche (B) d'ignifugation est en Palusol (marque de fabrique).

4. Plaque (S1, S2, T) d'obturation anti-feu suivant l'une des revendications 1 à 3,
**caractérisée en ce que**
la couche (B) d'ignifugation a une épaisseur d'au moins 1,5 mm.

5. Plaque (S1, S2, T) d'obturation anti-feu suivant l'une des revendications 1 à 4,
**caractérisée en ce que**
il est prévu une tôle d'aluminium comme plaque (G) de base métallique.

6. Plaque (S1, S2, T) d'obturation anti-feu suivant la revendication 5,
**caractérisée en ce que**
la tôle d'aluminium a une épaisseur minimum de 4 mm.

7. Plaque (S1, S2, T) d'obturation anti-feu suivant l'une des revendications 1 à 4,
**caractérisée en ce que**
il est prévu une tôle d'acier pour la plaque (G) de base métallique.

8. Plaque (S1, S2, T) d'obturation anti-feu suivant la revendication 7,
**caractérisée en ce que**
la tôle d'acier a une épaisseur minimum de 1,5 mm.

9. Plaque (S1, S2, T) d'obturation anti-feu suivant l'une des revendications 1 à 8,
**caractérisée en ce que**
la couche (B) d'ignifugation est protégée des vibrations et de secousses à l'aide de vissages.

10. Plaque (S1, S2, T) d'obturation anti-feu suivant l'une des revendications 1 à 9,
**caractérisée en ce que**
la couche (B) d'ignifugation est collée à la plaque (G) de base métallique.
